Europäisches Patentamt

(19) European Patent Office

Office européen des brevets

(11) Publication number: **0 087 269**
**B1**

(12) **EUROPEAN PATENT SPECIFICATION**

(45) Date of publication of patent specification: 20.11.86

(51) Int. Cl.⁴: **A 01 N 27/00,** A 01 N 29/08,
A 01 N 29/10, A 01 N 35/04

(21) Application number: 83300792.5

(22) Date of filing: 17.02.83

(54) **Plant growth regulators.**

(30) Priority: 20.02.82 GB 8205080

(43) Date of publication of application:
31.08.83 Bulletin 83/35

(45) Publication of the grant of the patent:
20.11.86 Bulletin 86/47

(84) Designated Contracting States:
AT BE CH DE FR GB IT LI LU NL SE

(56) References cited:
DE-C- 810 199
FR-A- 950 532
NL-C- 60 259

CHEMICAL ABSTRACTS, vol. 95, no. 15, 12th
October 1981, page 174, no. 127330z,
Columbus, Ohio, USA J.L. BEVERIDGE et al.:
"Dimethylnaphtalene as a sprout suppressant
for seed and ware potatoes"

(73) Proprietor: COALITE GROUP PLC
Buttermilk Lane
Bolsover nr.Chesterfield Derbyshire S44 6AB
(GB)

(72) Inventor: Everest-Todd, Selwyn
Willow House Research Unit Thorpe-le-Street
Everingham York. YO4 4LJ (GB)

(74) Representative: Seaborn, George Stephen et al
c/o Edward Evans & Co. Chancery House 53-64
Chancery Lane
London WC2A 1SD (GB)

(56) References cited:
CHEMICAL ABSTRACTS, vol. 95, no. 17, 26th
October 1981, page 167, no. 145184j,
Columbus, Ohio, USA J.L. BEVERIDGE et al.:
"Assessment of some volatile organic
compounds as sprout suppressants for ware
and seed potatoes"

Courier Press, Leamington Spa, England.

**Description**

The present invention relates to plant growth regulator compositions comprising substituted naphthalenes and to the use of substituted naphthalenes for inhibiting premature sprouting of potatoes.

Chemical Abstracts, Volume 95, No. 15, 12th October 1981, page 174, No. 1273302z. J. L. Beveridge et al. comprises an abstract of Potato Res. 1981, 24(1), pp. 77—88, which discloses the use of a mixture of dimethylnaphthalene (DMN) isomers, principally the 1,6-isomer, for suppressing sprouting in potatoes.

Chemical Abstracts, Volume 95, No. 17, 26 October 1981, page 167, No. 145184j, J. L. Beveridge et al. comprises an abstract of Potato Res. 1981, 24(1), pp. 61—76, which discloses the use of the 1,4-, 1,6- and 2,3-isomers of DMN for suppressing sprouting in potatoes.

NL—C—60 259 discloses the use of both a substituted naphthalene, such as naphthyl formic acid, and a disease control material, such as unslaked lime, together for suppressing sprouting in potatoes.

According to a first aspect of the invention there is provided a plant growth regulator composition comprising an inert carrier or diluent and, as an active substance, at least one substituted naphthalene selected from 1-ethylnaphthalene, 2-ethylnaphthalene, 1-bromo-2-methylnaphthalene, 1-bromo-4-methylnaphthalene, 1-chloro-4-methylnaphthalene, 1,4-dibromonaphthalene, 1-bromo-2,3-dimethylnaphthalene, 1-acetyl-4-methylnaphthalene, 2,6-diisopropylnaphthalene, 2-isopropylnaphthalene, 1-chloromethylnaphthalene, 2-methylnaphthalene, 1-methylnaphthalene and 2,3-dihydronaphthalene.

The plant growth regulator composition of the invention may further comprise a growth regulator, not being a substituted naphthalene, and/or a disease control material.

Examples of growth regulators other than substituted naphthalenes are mitosis inhibitors e.g. substituted carbamates, metabolic interference compounds having a C—C—N—N linkage e.g. N-dimethylaminosuccinamic acid and ethylene generators e.g. ethephon (that is (2-chloroethyl)phosphonic acid). Examples of disease control materials are guanidinium compounds, benzimidazole compounds, chlorinated aromatic and aliphatic compounds and substituted thiocarbamates.

The growth regulator compositions of the present invention are particularly useful for inhibiting premature sprouting of potatoes.

According to a second aspect of the invention, there is provided a method of inhibiting premature sprouting of potatoes, which comprises applying to the potatoes at least one substituted naphthalene selected from 1-ethylnaphthalene, 2-ethylnaphthalene, 1-bromo-2-methylnaphthalene, 1-bromo-4-methylnaphthalene, 1-chloro-4-methylnaphthalene, 1,4-dibromonaphthalene, 1-bromo-2,3-dimethylnaphthalene, 1-acetyl-4-methylnaphthalene, 2,6-diisopropylnaphthalene, 2-isopropylnaphthalene, 1-chloromethylnaphthalene, 2-methylnaphthalene, 1-methylnaphthalene and 2,3-dihydronaphthalene.

The substituted naphthalenes applied to the potatoes in the second aspect of the invention may be comprised in a composition according to the first aspect of the invention.

In the second aspect of the invention, a particulate solid, a mist or a thermal vapour or fog comprising the at least one substituted naphthalene may be applied to the potatoes.

Depending on the active substance (i.e. the substituted naphthalene or naphthalenes) employed a growth regulator composition according to the present invention may be made up by dispersing or dissolving the active substance or substances in a liquid or solid carrier. Depending upon the manner in which the composition is made up, it may be applied to the plants as a particulate solid or in the form of a mist or a thermal vapour or fog.

For instance, a mixture of isomers of dimethylnaphthalene may be diluted with a monomethylnaphthalene, for application to the plants as a thermal fog or vapour; a suitable dilution being one volume of the mixed isomers and five volumes of the monomethylnaphthalene.

Dosage rates will depend on the precise manner in which the growth regulator composition is made up.

The present invention is illustrated in the following Example.

Example

One litre of mixed isomers of dimethylnaphthalene was diluted with 5 litres of monomethylnaphthalene for application to potatoes as a thermal vapour. This formulation is both stable and volatile and can be applied to bulk heaps of potatoes by means of thermal fogging apparatus. The dosage rate required varies from 50 ml per tonne of tubers to 100 ml per tonne of tubers and is best repeated at intervals of 70 to 100 days.

To one litre of the mixed substituted naphthalenes add one litre of Tubazole applied as a thermal fog. Tubazole is a mixture of byacin and TBZ. Dosage rate to be 100 to 200 ml per tonne.

The formulation produced was tested so as to evaluate growth regulation properties. The variety of potatoes used was "Record" and the storage conditions were such as to give abundant sprout growth.

Results are given in Table 1 below. In this Table, the effectiveness of the composition is given for disease control, namely, against skin spot, dry spot, dry rot and black scurf and for sprout control. The results are given in terms of a score on the scale:— 0 to 10, in which in respect of sprouting "0" indicates no

2

effect on sprouting growth and "10" indicates no sprouting growth and, in respect of disease control, "0" indicates no effect and "10" indicates no visible disease symptoms.

TABLE 1
Disease control

| Formulations | Rate applied (mg/kg) | Skin spot | Dry rot | Black scurf | Sprout control |
|---|---|---|---|---|---|
| Control | 0 | 0 | 0 | 0 | 0 |
| Example | Dimethylnaphthalenes 25 TBZ and Byacin 25 | 9 | 9 | 10 | 8 |

The effect of substituted naphthalenes as specified for use in the present invention is further illustrated in the following Tables. Table 2 below shows the effect of the specified naphthalenes on the length of sprouts in potatoes after fifteen weeks in storage of the potatoes. A control was used which during this time provided a mean length of the longest sprout in millimetres of 175 in sixty of the potatoes. Table 3 gives the weight of the sprouts of the potatoes subjected to the tests of Table 2. Table 4 provides a comparison in relation to length of sprout and weight of sprout of alpha-ethylnaphthalene (1-ethylnaphthalene) and betaethylnaphthalene (2-ethylnaphthalene). Table 5 shows the effect of the specified substances on potatoes which have been previously hand de-sprouted in respect of sprout length after a period of five weeks. Table 6 shows the effect of the specified substances on sprout emergence after sixteen days following planting of the potatoes and Table 7 shows the effect of the specified substances on sprout emergence after thirty-eight days following planting.

TABLE 2
Final assessment (storage)—15 weeks sprout length

| | Length of longest sprout[a] | | |
|---|---|---|---|
| Control | 175 | | |
| | Dose mg/kg | | |
| | 20 | 100 | 500 |
| 1-bromo-2,3-dimethylnaphthalene | 132 | 85 | 64[b] |
| 1-chloro-4-methylnaphthalene | 81 | 4 | 1 |
| 1-bromo-4-methylnaphthalene | 63 | 10 | 2 |
| 1-bromo-2-methylnaphthalene | 41 | 25 | 8 |
| 1-chloromethylnaphthalene | 182 | 147 | 124 |
| 1,4-dibromonaphthalene | 120 | 11 | 26 |
| 1-acetyl-4-methylnaphthalene | 156 | 84 | 83[c] |
| 2-methylnaphthalene | 162 | 121 | 4 |
| 1-methylnaphthalene | 139 | 129 | 8 |
| 1-ethylnaphthalene | 24 | 9 | 0 |
| mixed monomethylnaphthalenes | 172 | 174 | 6 |
| LSD 5% (least significant difference) | 16 | 13 | 15 |

[a] mean length of longest sprout (mm) 60 tubers
[b] level employed 161 ppm
[c] level employed 173 ppm.

# 0 087 269

## TABLE 3
### Final assessment (storage) after 15 weeks sprout weight

| | Total sprout weight[a] | | |
|---|---|---|---|
| Control | 372 | | |
| | Dose mg/kg | | |
| | 20 | 100 | 500 |
| 1-bromo-2,3-dimethylnaphthalene | 295 | 205 | 197[b] |
| 1-chloro-4-methylnaphthalene | 193 | 10 | 1 |
| 1-bromo-4-methylnaphthalene | 172 | 29 | 6 |
| 1-bromo-2-methylnaphthalene | 94 | 80 | 19 |
| 1-chloromethylnaphthalene | 375 | 298 | 193 |
| 1,4-dibromonaphthalene | 280 | 26 | 75 |
| 1-acetyl-4-methylnaphthalene | 305 | 224 | 189[c] |
| 2-methylnaphthalene | 311 | 245 | 18 |
| 1-methylnaphthalene | 288 | 245 | 3 |
| 1-ethylnaphthalene | 52 | 10 | 0 |
| mixed monomethylnaphthalene | 346 | 300 | 11 |

[a] total sprout weight from 60 tubers (g)
[b] level employed 161 ppm.
[c] level employed 173 ppm.

## TABLE 4
### α-Naphthalene versus β-naphthalene 14 week storage 100 ppm cv. Desiree

| | Length of longest sprout | Total sprout weight[a] |
|---|---|---|
| control | 339 | 822 |
| α-ethylnaphthalene | 10 | 26 |
| β-ethylnaphthalene | 63 | 127 |

[a] total weight of sprouts from 30 tubers.

**0 087 269**

TABLE 5

Selected treatments hand desprouted 6.4.82, aired in trays 5 weeks under light. Planted 18.5.82

| | Length of sprout[a] | | |
| | 19 | | |
| | 20 ppm | 100 ppm | 500 ppm |
|---|---|---|---|
| 1-ethylnaphthalene | 23 | 22 | 2 |
| 1-chloro-4-methylnaphthalene | 25 | 13 | 5 |
| 1-bromo-4-methylnaphthalene | 21 | 8 | 4 |
| 1-bromo-2-methylnaphthalene | 17 | — | 4 |
| 1,4-dibromonaphthalene | — | 9 | — |
| 1-bromo-2,3-dimethylnaphthalene | — | 15 | — |

[a] 60 tubers.

TABLE 6

| | % Emergence after 16 days | | |
| Control | 81 | | |
| | 20 ppm | 100 ppm | 500 ppm |
|---|---|---|---|
| 1-ethylnaphthalene | 78 | 94 | — |
| 1-chloro-4-methylnaphthalene | 85 | 62 | 9 |
| 1-bromo-4-methylnaphthalene | 73 | 28 | 19 |
| 1-bromo-2-methylnaphthalene | 60 | — | — |
| 1,4-dibromonaphthalene | — | 58 | — |

TABLE 7

| | % Emergence after 38 days | | |
| Control | 100 | | |
| | 20 ppm | 100 ppm | 500 ppm |
|---|---|---|---|
| 1-ethylnaphthalene | 100 | 97 | 87 |
| 1-chloro-4-methylnaphthalene | 97 | 100 | 97 |
| 1-bromo-4-methylnaphthalene | 97 | 93 | 97 |
| 1-bromo-2-methylnaphthalene | — | 93 | — |
| 1,4-dibromonaphthalene | — | 93 | — |

The above Tables 2 to 7 clearly demonstrate that all the presently preferred compounds have the effect of delaying sprouting of potatoes and that certain of the substituted naphthalenes are especially effective for this purpose.

5

**Claims for the Contracting States: BE, CH, DE, FR, GB, IT, LI, LU, NL, SE**

1. A plant growth regulator composition comprising an inert carrier or diluent and, as an active substance, at least one substituted naphthalene selected from 1-ethylnaphthalene, 2-ethylnaphthalene, 1-bromo-2-methylnaphthalene, 1-bromo-4-methylnaphthalene, 1-chloro-4-methylnaphthalene, 1,4-dibromonaphthalene, 1-bromo-2,3-dimethylnaphthalene, 1-acetyl-4-methylnaphthalene, 2,6-diisopropylnaphthalene, 2-isopropylnaphthalene, 1-chloromethylnaphthalene, 2-methylnaphthalene, 1-methylnaphthalene and 2,3-dihydronaphthalene.

2. A plant growth regulator composition as claimed in claim 1, further comprising a growth regulator, not being a substituted naphthalene, and/or a disease control material.

3. A plant growth regulator composition as claimed in claim 2, in which the growth regulator, not being a substituted naphthalene, is a mitosis inhibitor, a metabolic interference compound or an ethylene generator.

4. A plant growth regulator composition as claimed in claim 2 or 3, in which the disease control agent is a guanidinium compound, a benzimidazole compound, a chlorinated aromatic or aliphatic compound or a substituted thiocarbamate.

5. A method for inhibiting premature sprouting of potatoes, which comprises applying to the potatoes at least one substituted naphthalene selected from 1-ethylnaphthalene, 2-ethylnaphthalene, 1-bromo-2-methylnaphthalene, 1-bromo-4-methylnaphthalene, 1-chloro-4-methylnaphthalene, 1,4-dibromonaphthalene, 1-bromo-2,3-dimethylnaphthalene, 1-acetyl-4-methylnaphthalene, 2,6-diisopropylnaphthalene, 2-isopropylnaphthalene, 1-chloromethylnaphthalene, 2-methylnaphthalene, 1-methylnaphthalene and 2,3-dihydronaphthalene.

6. A method according to claim 5, wherein the at least one substituted naphthalene is comprised in a composition according to any of claims 1 to 4.

7. A method as claimed in claim 5 or 6, in which a particulate solid, a mist or thermal vapour or fog comprising said at least one substituted naphthalene is applied to the potatoes.

**Claims for the Contracting State: AT**

1. A method of preparing a plant growth regulator composition comprising admixing together an inert carrier or diluent and, as an active substance, at least one substituted naphthalene selected from 1-ethylnaphthalene, 2-ethylnaphthalene, 1-bromo-2-methylnaphthalene, 1-bromo-4-methylnaphthalene, 1-chloro-4-methylnaphthalene, 1,4-dibromonaphthalene, 1-bromo-2,3-dimethylnaphthalene, 1-acetyl-4-methylnaphthalene, 2,6-diisopropylnaphthalene, 2-isopropylnaphthalene, 1-chloromethylnaphthalene, 2-methylnaphthalene, 1-methylnaphthalene and 2,3-dihydronaphthalene.

2. A method as claimed in claim 1, further comprising admixing with the carrier or diluent and said at least one substituted naphthalene a growth regulator, not being a substituted naphthalene, and/or a disease control material.

3. A method as claimed in claim 2, in which the growth regulator, not being a substituted naphthalene, is a mitosis inhibitor, a metabolic interference compound or an ethylene generator.

4. A method as claimed in claim 2 or 3, in which the disease control agent is a guanidinium compound, a benzimidazole compound, a chlorinated aromatic or aliphatic compound or a substituted thiocarbamate.

5. A method for inhibiting premature sprouting of potatoes, which comprises applying to the potatoes at least one substituted naphthalene selected from 1-ethylnaphthalene, 2-ethylnaphthalene, 1-bromomethylnaphthalene, 1-bromo-4-methylnaphthalene, 1-chloro-4-methylnaphthalene, 1,4-dibromonaphthalene, 1-bromo-2,3-dimethylnaphthalene, 1-acetyl-4-methylnaphthalene, 2,6-diisopropylnaphthalene, 2-isopropylnaphthalene, 1-chloromethylnaphthalene, 2-methylnaphthalene, 1-methylnaphthalene, and 2,3-dihydronaphthalene.

6. A method according to claim 5, wherein the at least one substituted naphthalene is comprised in a composition prepared by a method according to any of claims 1 to 4.

7. A method as claimed in claim 5 or 6, in which a particulate solid, a mist or thermal vapour or fog comprising said at least one substituted naphthalene is applied to the potatoes.

**Patentansprüche für die Vertragsstaaten: BE, CH, DE, FR, GB, IT, LI, LU, NL, SE**

1. Eine Zusammensetzung zur Regulierung des Wachstums von Pflanzen, bestehend aus oder enthaltend einen inerten Träger oder Lösungsmittel und als aktive Substanz mindestens eines der folgenden substituierten Naphthaline: 1-Ethylnaphthalin, 2-Ethylnaphthalin, 1-Brom-2-methylnaphthalin, 1-Brom-4-methylnaphthalin, 1-Chlor-4-methylnaphthalin, 1,4-Dibromnaphthalin, 1-Brom-2,3-dimethylnaphthalin, 1-Acetyl-4-methylnaphthalin, 2,6-Diisopropylnaphthalin, 2-Isopropylnaphthalin, 1-Chlormethylnaphthalin, 2-Methylnaphthalin, 1-Methylnaphthalin und 2,3-Dihydronaphthalin.

2. Eine Zusammensetzung zur Regulierung des Wachstums von Pflanzen nach Anspruch 1, enthaltend einen weiteren Wachstumsregulator, der kein substituiertes Naphthalin ist, und/oder eine Substanz zur Krankheitsbekämpfung.

3. Eine Zusammensetzung zur Regulierung des Wachstums von Pflanzen nach Anspruch 2, worin der Wachstumsregulator, der nicht ein substituiertes Naphthalin ist, ein Mitose-Inhibitor, eine Verbindung, die den Stoffwechsel beeinflußt, oder eine Substanz ist, die Ethylen bildet.

4. Eine Zusammensetzung zur Regulierung des Wachstums von Pflanzen nach Anspruch 2 oder 3, worin das Mittel zur Krankheitsbekämpfung eine Guanidin-Verbindung, eine Benzimidazol-Verbindung, eine chlorierte aromatische oder aliphatische Verbindung oder ein substituiertes Thiocarbamat ist.

5. Verfahren zur Verhinderung des vorzeitigen Keimens von Kartoffeln, indem den Kartoffeln mindestens eine der folgenden substituierten Naphthaline zugegeben wird: 1-Ethylnaphthalin, 2-Ethylnaphthalin 1-Brom-2-methylnaphthalin, 1-Brom-4-methylnaphthalin, 1-Chlor-4-methylnaphthalin, 1,4-Dibromnaphthalin, 1-Brom-2,3-dimethylnaphthalin, 1-Acetyl-4-methylnaphthalin, 2,6-Diisopropylnaphthalin, 2-Isopropylnaphthalin, 1-Chlormethylnaphthalin, 2-Methylnaphthalin, 1-Methylnaphthalin und 2,3-Dihydronaphthalin.

6. Verfahren nach Anspruch 5, worin mindestens eines der substituierten Naphthaline in einer Zusammensetzung nach einem der Ansprüche 1 bis 4 enthalten ist.

7. Verfahren nach Anspruch 5 oder 6, worin ein teilchenförmiger Feststoff, eine Vernebelung, Dampf oder Sprühregen, enthaltend mindestens eines der substituierten Naphthaline, auf die Kartoffeln aufgebracht wird.

### Patentansprüche für den Vertragsstaat: AT

1. Ein Verfahren zur Herstellung einer Zusammensetzung zur Regulierung des Wachstums von Pflanzen, indem ein inerter Träger oder Lösungsmittel und als aktive Substanz mindestens eines der folgenden substituierten Naphthaline, 1-Ethylnaphthalin, 2-Ethylnaphthalin, 1-Brom-2-methylnaphthalin, 1-Brom-4-methylnaphthalin, 1-Chlor-4-methylnaphthalin, 1,4-Dibromnaphthalin, 1-Brom-2,3-dimethyl-naphthalin, 1-Acetyl-4-methylnaphthalin 2,6-Diisopropylnaphthalin, 2-Isopropylnaphthalin, 1-Chlormethylnaphthalin, 2-Methylnaphthalin, 1-Methylnaphthalin und 2,3-Dihydronaphthalin, zusammengemischt werden.

2. Ein Verfahren nach Anspruch 1, indem mit dem Träger oder Lösungsmittel und dem mindestens einem substituierten Naphthalin ein weiterer Wachstumsregulator, der kein substituiertes Naphthalin ist, und/oder eine Substanz zur Krankheitsbekämpfung, zusammengemischt werden.

3. Ein Verfahren nach Anspruch 2, worin der Wachstumsregulator, der nicht ein substituiertes Naphthalin ist, ein Mitose-Inhibitor, eine Verbindung, die den Stoffwechsel beeinflußt, oder eine Substanz ist, die Ethylen bildet.

4. Ein Verfahren nach Anspruch 2 oder 3, worin das Mittel zur Krankheitsbekämpfung eine Guanidin-Verbindung, eine Benzimidazol-Verbindung, eine chlorierte aromatische oder aliphatische Verbindung oder ein substituiertes Thiocarbamat ist.

5. Verfahren zur Verhinderung des vorzeitigen Keimens von Kartoffeln, indem den Kartoffeln mindestens eine der folgenden substituierten Naphthaline zugegeben wird: 1-Ethylnaphthalin, 2-Ethylnaphthalin 1-Brom-2-methylnaphthalin, 1-Brom-4-methylnaphthalin, 1-Chlor-4-methylnaphthalin, 1,4-Dibromnaphthalin, 1-Brom-2,3-dimethylnaphthalin, 1-Acetyl-4-methylnaphthalin, 2,6-Diisopropylnaphthalin, 2-Isopropylnaphthalin, 1-Chlormethylnaphthalin, 2-Methylnaphthalin, 1-Methylnaphthalin und 2,3-Dihydronaphthalin.

6. Verfahren nach Anspruch 5, worin mindestens eines der substituierten Naphthaline in einer Zusammensetzung nach einem der Ansprüche 1 bis 4 enthalten ist.

7. Verfahren nach Anspruch 5 oder 6, worin ein teilchenförmiger Feststoff, eine Vernebelung, Dampf oder Sprühregen, enthaltend mindestens eines der substituierten Naphthaline, auf die Kartoffeln aufgebracht wird.

### Revendications pour les Etats Contractants: BE, CH, DE, FR, GB, IT, LI, LU, NL, SE

1. Une composition de régulation de la croissance des plantes comprenant un véhicule ou diluant inerte et, comme substance active, au moins un naphtalène substitué choisi parmi les corps suivants: 1-éthylnaphtalène, 2-éthylnaphtalène, 1-bromo-2-méthylnaphtalène, 1-bromo-4-méthylnaphtalène, 1-chloro-4-méthylnaphtalène, 1,4-dibromonaphtalène, 1-bromo-2,3-diméthylnaphtalène, 1-acétyl-4-méthylnaphtalène, 2,6-diisopropylnaphtalène, 2-isopropylnaphtalène, 1-chlorométhylnaphtalène, 2-méthylnaphtalène, 1-méthylnaphtalène et 2,3-dihydronaphtalène.

2. Une composition de régulation de croissance des plantes selon la revendication 1, comprenant en outre un agent de régulation de la croissance autre qu'un naphtalène substitué et/ou un produit de contrôle des maladies.

3. Une composition de régulation de croissance des plantes selon la revendication 2, dans laquelle le régulateur de croissance autre qu'un naphtalène substitué est un inhibiteur de mytose, un composé d'interférence avec le métabolisme ou un générateur d'éthylène.

4. Une composition de régulation de croissance selon la revendication 2 ou 3, dans laquelle l'agent de contrôle des maladies est un composé du guanidinium, un composé du benzimidazole, un composé aromatique ou aliphatique chloré ou un thiocarbamate substitué.

5. Un procédé d'inhibition de la germination prématurée des pommes de terre qui consiste à appliquer

7

au pomme de terre au moins un naphtalène substitué choisi parmi les corps suivants: 1-éthylnaphtalène, 2-éthylnaphtalène, 1-bromo-2-méthylnaphtalène, 1-bromo-4-méthylnaphtalène, 1-chloro-4-méthylnaphtalène, 1,4-dibromonaphtalène, 1-bromo-2,3-diméthylnaphtalène, 1-acétyl-4-méthylnaphtalène, 2,6-diisopropylnaphtalène, 2-isopropylnaphtalène, 1-chlorométhylnaphtalène, 2-méthylnaphtalène, 1-méthylnaphtalène et 2,3-dihydronaphtalène.

6. Un procédé selon la revendication 5, dans laquelle au moins un naphtalène substitué est inclus dans une composition selon l'une quelconque des revendications 1 à 4.

7. Un procédé selon la revendication 5 ou 6, dans laquelle un solide particulaire, un brouillard ou un brouillard ou vapeur chaude comprenant au moins un naphtalène substitué est appliqué aux pommes de terre.

**Revendications pour l'Etat Contractant: AT**

1. Un procédé de préparation d'une composition de régulation de la croissance des plantes consistant à mélanger en même temps un support ou diluant inerte et comme substance active au moins un naphtalène choisi parmi les corps suivants: 1-éthylnaphtalène, 2-éthylnaphtalène, 1-bromo-2-méthylnaphtalène, 1-bromo-4-méthylnaphtalène, 1-chloro-4-méthylnaphtalène, 1,4-dibromonaphtalène, 1-bromo-2,3-diméthylnaphtalène, 1-acétyl-4-méthylnaphtalène, 2,6-diisopropylnaphtalène, 2-isopropylnaphtalène, 1-chlorométhylnaphtalène, 2-méthylnaphtalène, 1-méthylnaphtalène et 2,3-dihydronaphtalène.

2. Un procédé selon la revendication 1, consistant en outre à mélanger avec le véhicule ou diluant et au moins un naphtalène substitue, un agent de régulation de la croissance autre qu'un naphtalène substitué et/ou un produit de contrôle des maladies.

3. Un procédé selon la revendication 2, dans laquelle l'agent de croissance des plantes autre qu'un naphtalène substitué est un inhibiteur de mytose, un composé d'interférence avec le métabolisme ou un générateur d'éthylène.

4. Un procédé selon la revendication 2 ou 3, dans laquelle l'agent de contrôle de la maladie est un composé de guanidinium, un composé du benzimidazole, un composé aromatique ou aliphatique chloré ou un thiocarbamate substitué.

5. Un procédé d'inhibition de la germination prématurée des pommes de terre qui consiste à appliquer aux pommes de terre au moins un naphtalène substitué choisi parmi les corps suivants: 1-éthylnaphtalène, 2-éthylnaphtalène, 1-bromo-2-méthylnaphtalène, 1-bromo-4-méthylnaphtalène, 1-chloro-4-méthylnaphtalène, 1,4-dibromonaphtalène, 1-bromo-2,3-diméthylnaphtalène, 1-acétyl-4-méthylnaphtalène, 2,6-diisopropylnaphtalène, 2-isopropylnaphtalène, 1-chlorométhylnaphtalène, 2-méthylnaphtalène, 1-méthylnaphtalène et 2,3-dihydronaphtalène.

6. Un procédé selon la revendication 5, dans laquelle au moins un naphtalène substitué est inclus dans une composition préparée par une méthode selon l'une quelconque des revendications 1 à 4.

7. Un procédé selon la revendication 5 ou 6, dans laquelle on applique aux pommes de terre un solide particulaire, un brouillard ou un brouillard ou vapeur chaude comprenant au moins un naphtalène substitué.